# EUROPÄISCHE PATENTANMELDUNG

(11) **EP 0 824 957 A1**
(43) Veröffentlichungstag der Anmeldung: **25.02.1998**
(21) Anmeldenummer: 97112706.3
(22) Anmeldetag: 24.07.1997
(51) Int. Cl.: B01D 63/02, B01D 61/18, C02F 1/44

(54) **Flüssigkeitsfilterelement**

(30) Priorität: 17.08.1996 DE 19633177
(71) Anmelder: FILTERWERK MANN & HUMMEL GmbH, 71631 Ludwigsburg (DE)
(72) Erfinder: Rösgen, André, 73630 Remshalden (DE)
(74) Vertreter: Voth, Gerhard, Dipl.-Ing.

(57) **Zusammenfassung**

Flüssigkeitsfilterelement mit wenigstens einer Hohlfaser 1, wobei wenigstens das eine Ende der wenigstens einen Hohlfaser 1 in einer Trägermatrix 2 eingebunden ist sowie wenigstens das andere Ende der wenigstens einen Hohlfaser 1 in einer Trägermatrix 2 eingebunden ist, wobei das Flüssigkeitsfilterelement 3 wenigstens einen Flüssigkeitseinlaß 4 und einen -auslaß 5 aufweist, wobei das Flüssigkeitsfilterelement 3 über wenigstens eine Haltevorrichtung 6 verfügt.

## Beschreibung

Die Erfindung betrifft ein Flüssigkeitsfilterelement mit wenigstens einer Hohlfaser.

Derartige Flüssigkeitsfilterelemente sind bekannt, z. B. aus der Brackwasserentsalzung.

Will man derartige Flüssigkeitsfilterelemente , z. B. als Sicherheitsfilter zur Abscheidung von Bakterien, Viren oder Ölen verwenden, so ist daran nachteilig, daß diese schnell zusetzen und schwer auswechselbar sind. Man könnte nun aufwendige Rückspülungsmethoden anwenden, dies wäre zum einen teuer, zum anderen ist der Einsatz zusätzlicher Medien notwendig.

Es ist somit Aufgabe der Erfindung, ein Flüssigkeitsfilterelement bzw. ein Wechselfilter der eingangs genannten Art dahingehend zu verbessern, daß ein zuverlässig abreinigendes Flüssigkeitsfilterelement, bzw. ein Wechselfilter mit einem darin befindlichen Flüssigkeitsfilterelement geschaffen wird, das einfach und billig zu reinigen bzw. auszuwechseln ist.

Erfindungsgemäß wird diese Aufgabe dadurch gelöst, daß wenigstens das eine Ende der wenigstens einen Hohlfaser in einer Trägermatrix eingebunden ist sowie wenigstens das andere Ende der wenigstens einen Hohlfaser in einer Trägermatrix eingebunden ist, wobei das Flüssigkeitsfilterelement wenigstens einen Flüssigkeitseinlaß und einen -auslaß aufweist, wobei das Flüssigkeitsfilterelement über wenigstens eine Haltevorrichtung verfügt, welche z. B. zur leichteren Montage bzw. Demontage des Flüssigkeitsfilterelements.

Eine vorteilhafte Weiterbildung der Erfindung sieht vor, daß die Hohlfaser aus Polysulfon besteht. Polysulfon eignet sich besonders zur Herstellung der hohen Fasern, da dieses gegenüber anderen Verbindungen chemisch resistent ist.

Eine andere vorteilhafte Weiterbildung der Erfindung sieht vor, daß die Hohlfaser über eine oder zwei Trennschichten verfügt. Bei vorhandenen zwei Trennschichten vergrößert sich die Filterfläche. Bei Membranen, bei denen die Trennschicht innen liegt, wirkt der poröse Aufbau der Hohlfaser als sogenannter Tiefenfilter bei der Filtration.

Eine vorteilhafte Weiterbildung der Erfindung sieht vor, daß beide Enden der Hohlfaser in der selben Trägermatrix eingebunden sind. Dies führt zu selbsttragenden Patronen, die vielfältige Anwendungen eröffnen.

Eine andere vorteilhatte Weiterbildung der Erfindung sieht vor, daß beide Enden parallel zueinander eingebunden sind. Auf diese Weise sind Flüssigkeitsfilterelemente herzustellen, die über eine sehr hohe Filteroberfläche bei gleichzeitig geringen Längenabmaßen verfügt. Gleichzeitig ist das Flüssigkeitsfilterelement, da es nur eine Haltevorrichtung benötigt, kürzer und läßt sich wesentlich einfacher austauschen, da nur ein kurzes Gehäuse vorhanden und notwendig ist, die Hohlfasern werden hierbei in Schleifen gelegt.

Eine vorteilhafte Weiterbildung der Erfindung sieht vor, daß der Einlaß über die Mantelfläche der Hohlfaser erfolgt. Die Verwendung der Hohlfaseroberfläche, insbesondere der äußeren Oberfläche garantiert ein Maximum an Filterfläche. Prinzipiell wäre die Filterung auch von innen nach außen denkbar, jedoch sind sowohl die Festigkeits- als auch die Filterflächenverhältnisse von außen nach innen günstiger, da der Filtrationsvorgang insbesondere mittels eines Druckgradienten vonstatten geht.

Eine andere vorteilhatte Weiterbildung der Erfindung sieht vor, daß der Auslaß über die Enden der Hohlfaser erfolgt. Zum einen hat dies Festigkeitsvorteile, zum anderen ist dadurch der Einsatz beispielsweise in einem Wechselfiltergehäuse möglich.

Eine vorteilhafte Weiterbildung der Erfindung sieht vor, daß die Trägermatrix Bestandteil der Haltevorrichtung ist. Dadurch kann die Trägermatrix als Flansch ausgebildet werden, der z. B. in einem Wechselfiltergehäuse befestigt wird. Dies spart Gewicht und Bearbeitungsschritte, wenn dieser Flansch z. B. simultan mit der Trägermatrixherstellung entsteht.

Eine vorteilhafte Weiterbildung der Erfindung sieht vor, daß die Hohlfaser in einem Längenbereich von 100 - 400 mm liegt. Bis ca. 400 mm lassen sich die Hohlfasern insbesondere in der Ausführungsform, in der sie so eingegossen werden, daß die Enden parallel liegen, also, daß die Hohlfaser als Schlinge eingegossen wird, mit wirtschaftlichen Vorteilen verwenden, insbesondere unter den Aspekten Filteroberfläche zu Außenabmessungen sowie der leichten Auswechselbarkeit.

Eine erfindungsgemäßer Lösungsansatz sieht vor, daß ein Flüssigkeitsfilterelement nach einem oder mehreren der vorgenannten Ansprüche in einem Wechselfilter zum Einsatz kommt.
Hierbei ist von Vorteil, daß eine derartige Vorrichtung sehr schnell ausgewechselt werden kann, bzw. universell einsetzbar ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung sind in den Zeichnungen dargestellt und werden im folgenden näher erläutert.

Die Zeichnungen zeigen:
- Figur 1: eine schematische Anordnung von Vorfilter und Wechselfilter im Vollstrom
- Figur 2: einen Schnitt durch einen Wechselfilter mit parallel angeordneten Hohlfaserenden
- Figur 3: das Detail X aus Figur 2
- Figur 4: einen Schnitt durch einen Wechselfilter mit beidseitig eingespannten Hohlfaserenden
- Figur 5: einen Schnitt durch einen Wechselfilter mit beidseitig eingespannten Hohlfaserenden und zentraler Permeatabführung auf der Einlaßseite
- Figur 6: einen Schnitt durch einen Wechselfilter mit beidseitig eingespannten Hohlfaserenden und zentraler Permeatabführung auf der gegenüberliegenden Seite des Einlasses und angeschlossener Rückspülungvorrichtung

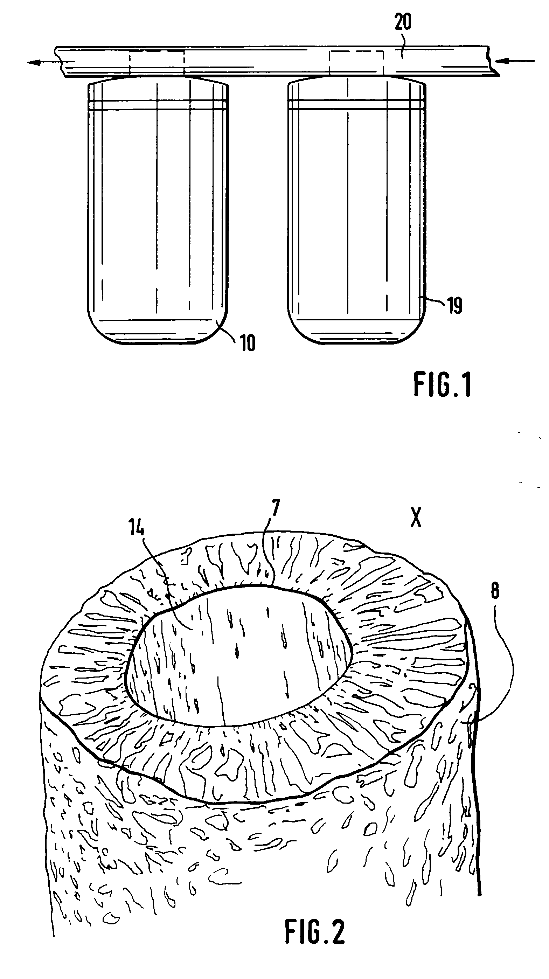

Ein solches Wechselfilter ist in Figur 1 dargestellt. Derartige Wechselfilter 10 mit darin enthaltenem Flüssigkeitsfilterelement 3 werden wie in Figur 1 dargestellt im Vollstrom in einer Flüssigkeitsleitung 20 angebracht. Damit ein solches Wechselfilter 10 im vorgesehenen Trennbereich, der zwischen 0,01 und 10 µm liegt, arbeiten kann, wird ein sogenanntes Vorfilter 19 vor dem eigentlichen Wechselfilter 10. angebracht, das die Grobfracht vorabscheidet. Dieses Vorfilter 19 kann ebenfalls als wechselbares Filter ausgeführt werden. Dieses Vorfilter kann im einzelnen Anwendungsfall als Absorptionsfilter, z.B mit einer Aktivkohlefüllung ausgeführt werden. Durch die sichere Trennung der zu reinigenden Flüssigkeit vor z.B. Öl und oder Keimen eignen sich diese Filter insbesondere im Einsatz als Trinkwasserfilter oder in den Bereichen, in denen unter keinen Umständen Ölrückstände in die Filterflüssigkeit gelangen dürfen. Des weiteren lassen sich mit diesem Wechselfilter 10 samt Flüssigkeitsfilterelement 3 jedwede Art von Trübstoffen entfernen. Es lassen sich so zum Beispiel makromolekulare Verbindungen zurückhalten. In derartigen Systemen herrscht geeigneterweise ein Leitungsdruckgradient von ca. 2 bar.

In der in der Figur 2 dargestellten Ausführungsform sind die ca. 5000 Hohlfasern 1, die einen Innendurchmesser von ca. 300 µm und eine Trenngrenze von etwa 0,3-2 µm aufweisen mittels einer Trägermatrix 2 an ihren Enden 9 derart zusammengefaßt, daß diese parallel zueinander angeordnet sind. Die Trägermatrix 2 ist hier derart ausgebildet, daß sie gleichzeitig die Haltevorrichtung 6 darstellt, mittels derer das Flüssigkeitsfilterelement 3 im Wechselfilter 10 dichtend befestigt ist. In einer spezielleren Ausgestaltung liegt die Trenngrenze des Flüssigkeitsfilterelementes 3 im Bereich von etwa 0,1 - 0,3 µm, wobei die jeweilige Länge der Hohlfasern von deren Kapillar-Innendurchmesser abhängt. Derartige Hohlfasern sind aus Polysulfon oder anderen Kunststoffmembranmaterialien gefertigt.

In einer alternativen Ausgestaltung ist die Trägermatrix derart ausgebildet, daß sie sämtliche Hohlfasern 1 über deren gesamten Verlauf von einem Ende 9 zum andern Ende 9 umfaßt, wobei die Trägermatrix einen radialen Durchtritt der zu filternden Flüssigkeit hin zur Hohlfaser ermöglicht.

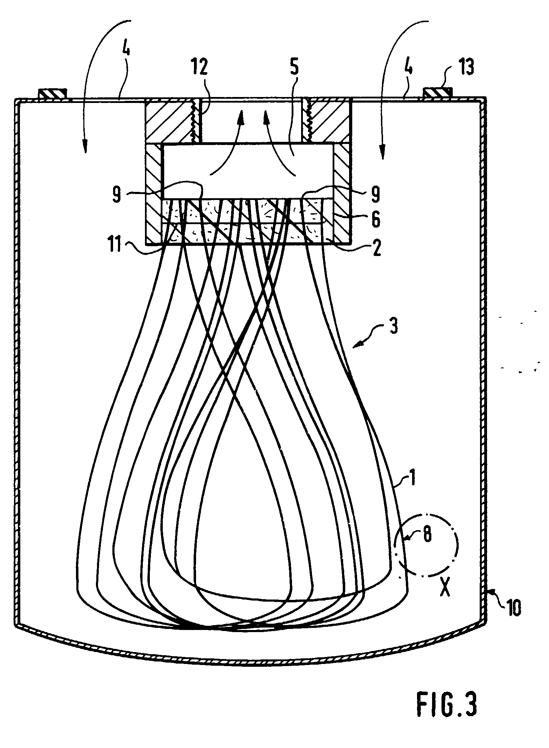

Die zu filternde Flüssigkeit wird im beschriebenen Wechselfilter 10 in Figur 2 über den Flüssigkeitseinlaß 4 zugeführt. Der Abscheidevorgang findet an der Mantelfläche 8 der Hohlfaser, die im Detail X dargestellt wird, und/oder an der Trennschicht 7 im Inneren der Hohlfaser 1 statt. Der Abtransport der gefilterten Flüssigkeit findet im Inneren der Hohlfaser 14 statt, wie dies in den Figuren 2 und 3 dargestellt ist.

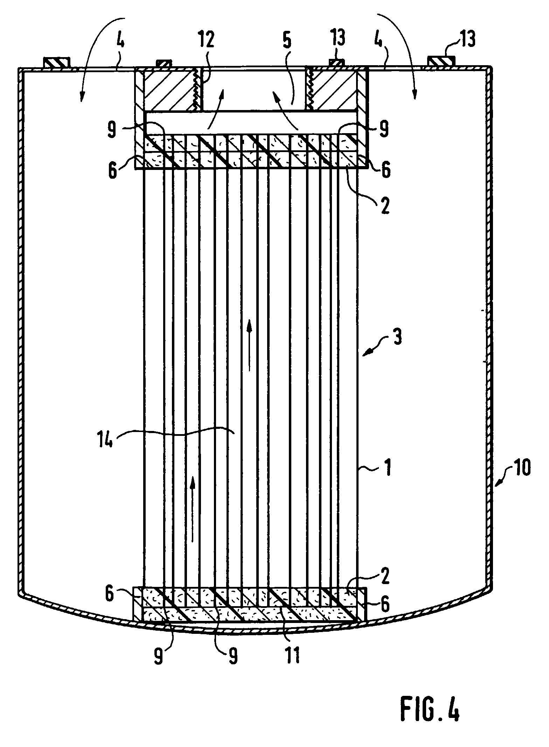

Die Trägermatrix ist derart ausgebildet, daß die Hohlfasern so eingebettet sind, daß die gefilterte Flüssigkeit lediglich durch die Hohlfaser 1, nicht aber durch die undurchlässige Einbindung der Hohlfasern 11 in der Trägermatrix 2 zum Flüssigkeitsauslaß 5 durchtreten kann. Im Bereich des Flüssigkeitsauslasses 5 befindet sich am Wechselfilter 10 ein Gewinde 12, mittels dessen das Wechselfilter 10 an die Gesamtapparatur angeflanscht wird. Ebenfalls im Bereich der Flüssigkeitsauslasses 5 befindet sich eine Dichtung 13, die den unerwünschten Austritt von gefilterter, bzw. ungefilterter Flüssigkeit verhindert. Die in Figur 2 dargestellte Anordnung der Hohlfasern ermöglicht die Verwendung von relativ kurzen Wechselfiltern 10. In der dargestellten Variante ist das Flüssigkeitsfilterelement 3 fest mit dem Wechselfilter 10 verbunden. In einer alternativen Ausgestaltung ist jedoch denkbar, daß das Flüssigkeitsfilterelement 3 austauschbar innerhalb des Wechselfilters 10 angebracht ist, wie dies z. B. in Figur 4 dargestellt wird.

In einer weiteren alternativen Ausgestaltung ist vorgesehen, daß das Hohlfaserbündel lediglich einseitig gefaßt ist, wobei die anderen, nicht gefaßten Ende der Hohlfasern verschweißt sind, ähnlich einer Sackgasse, so daß die zu filternde Flüssigkeit über die Membranoberfläche eintritt und über das gefaßte offene Ende austreten kann.

In Figur 3 wird das Detail X aus der Figur 2 vergrößert dargestellt, wobei dabei das Innere der Hohlfaser 14 sowie die Trennschicht 7 und die Mantelfläche 8 der Hohlfaser zu erkennen sind.

Bei dem in Figur 4 dargestellten Ausführungsbeispiel sind die Hohlfasern 1 ausgestreckt angeordnet, so daß sich deren Enden 9 auf gegenüberliegenden Seiten des Flüssigkeitsfilterelements 3 befinden. Hier ist die Trägermatrix 2 derart ausgestaltet, daß auf der der Flüssigkeitsauslaßseite 5 gegenüberliegenden Seite die Hohlfaserenden 9 in einer undurchlässigen Einbindung 11 angeordnet sind. Die Zuführung der zu filternden Flüssigkeit erfolgt über den Flüssigkeitseinlaß 4. Der Transport der gefilterten Flüssigkeit erfolgt im Inneren der Hohlfaser 14. Der Flüssigkeitsauslaß 5 des Flüssigkeitsfilterelements 3 erfolgt über die Enden 9 der Hohlfasern, die auf der Seite Flüssigkeitsauslaßes 5 in der Trägermatrix 2, die als Haltevorrichtung 6 ausgebildet ist und darüber im Wechselfilter 10 befestigt ist, gefaßt sind. Die Befestigung des Wechselfilters 10 erfolgt mittels Gewinde 12, an der Gesamtapparatur, die in Figur 1 schematisch angedeutet ist. Die Abdichtung von Flüssigkeitseinlaß 4 und Flüssigkeitsauslaß 5 erfolgt mittels der Dichtungen 13.

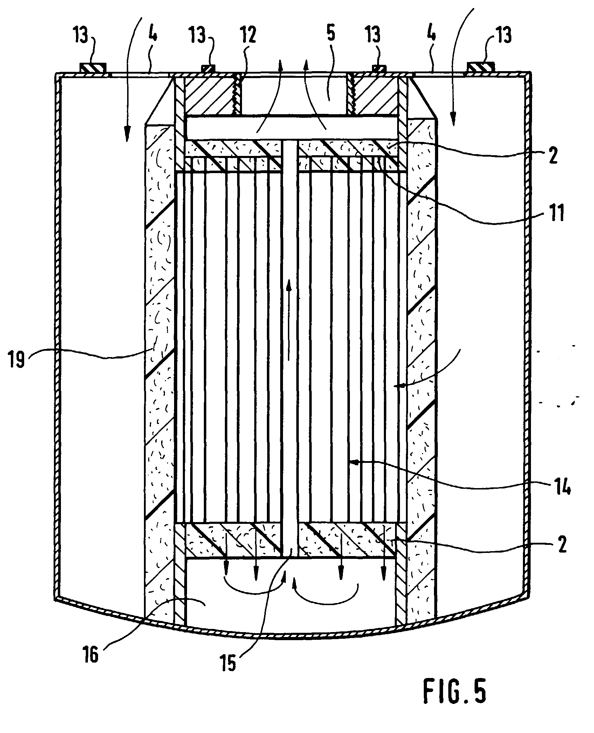

In dem in Figur 5 dargestellten Ausführungsbeispiel sind die Hohlfasern 1 ebenfalls wie in Figur 4 ausgestreckt angeordnet, so daß sich deren Enden 9 auf gegenüberliegenden Seiten des Flüssigkeitsfilterelements 3 befinden. Der Transport der gefilterten Flüssigkeit erfolgt im Inneren der Hohlfaser 14. Hier ist die Trägermatrix 2 derart ausgestaltet, daß auf der der Flüssigkeitsauslaßseite 5 gegenüberliegenden Seite die Hohlfaserenden 9 in der Trägermatrix 2 derart angeordnet sind, daß die gefilterte Flüssigkeit zentral auf der dem Flüssigkeitsauslaß 5 gegenüberliegenden Seite in einen Sammelraum 16 tritt und dann über eine zentrale Rückführung 15 im Innern des Flüssigkeitselements 3 durch dieses hin zum Flüssigkeitsauslaß gelangt. Der Flüssigkeitsauslaß 5 des Flüssigkeitsfilterelements 3 erfolgt über die zentrale Rückführung, die auf der Seite Flüssigkeitsauslaßes 5 in der Trägermatrix 2, die als Haltevorrichtung 6 ausgebildet ist und darüber im Wechselfilter 10 befestigt ist, gefaßt sind. In der Trägermatrix 2 sind die Enden der Hohlfasern 9 undurchlässig eingebunden 11. Die Befestigung des Wechselfilters 10 erfolgt mittels Gewinde 12, an der Gesamtapparatur, die in Figur 1 schematisch angedeutet ist. Die Abdichtung von Flüssigkeitseinlaß 4 und Flüssigkeitsauslaß 5 erfolgt mittels der Dichtungen 13.

In diesem Ausführungsbeispiel ist ebenfalls ein Vorfilter 19 vorgeschaltet, das allerdings im gleichen Gehäuse wie die Hohlfasern untergebracht ist und das die Grobfracht vorabscheidet.

In einer speziellen Ausführungsform weist der Vorfilter etwa eine Trenngrenze von 5 µm auf, wobei dieser Vorfilter beispielsweise aus einer metallischen Folie, z.B. einer Nickelfolie besteht und einen mechanischen Schutz der das Hauptfilter bildenden Hohlfasern, die eine Trenngrenze von etwa 0,1 µm aufweisen, darstellt.

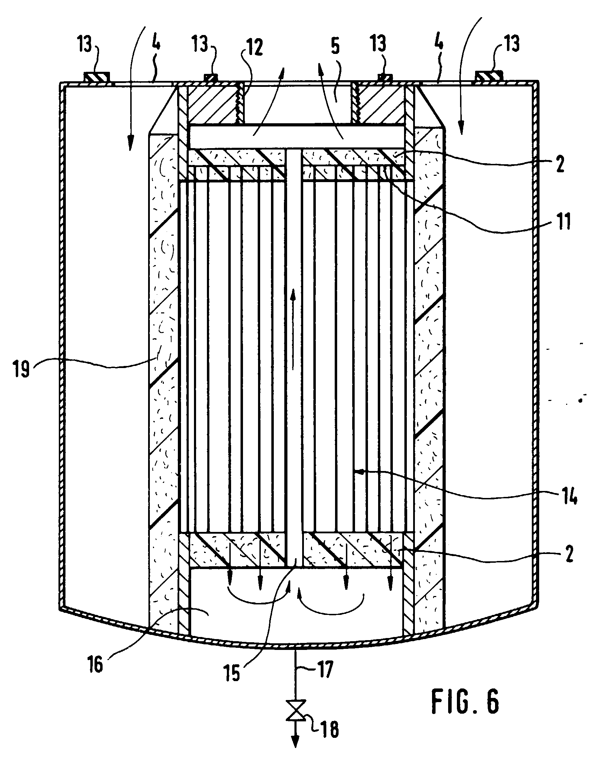

Beim Ausführungsbeispiel in Figur 6 handelt es sich um eine Variante des Beispiels in Figur 5. Im Unterschied zu Figur 5 wird im Anschluß an den Sammelraum 16 über eine Rückspülleitung 17 mittels Rückspülventil 18 die Rückspülung des Wechselfilters 10 bzw. dessen Flüssigkeitsfilterelements 3 möglich. Hierbei wird durch Öffnen des Ventils 18 die Rückspülung ermöglicht, in dem ein sogenannter Cross-Flow-Effekt im Flüssigkeitsfilterelement entsteht. Diese Rückspülung erfolgt beispielsweise im Zusammenspiel mit einem weiteren Rückspülventil zyklisch, das mit der Gesamtapparatur zusammenwirkt, welches nicht extra dargestellt ist. Die Rückspülung erfolgt beispielsweise entweder mittels eines Lösungsmittels oder eines Druckstoßes, z.B. aus einer Druckluftleitung. Die Rückspülmedien werden zu diesem Zweck über die Rückspülleitung 17 dem Wechselfilter 10 bzw. dem darin befindlichen Flüssigkeitsfilterelement 3 entgegen der Filterrichtung zugeführt.

Ebenfalls kann die Rückspülung mittels einer Strömungsumkehr in der Weise erfolgen, daß die gefilterte Flüssigkeit entgegen der Strömungsrichtung durch die Hohlfasermembrane zum Durchgang gebracht wird, wobei dann das der Rückspülleitung 17 nachfolgende Rückspülventil zyklisch geöffnet wird und die Rückspülleitung somit den Abfluß der Rückspülflüssigkeit in Zeitabständen ermöglicht.

### Bezugszeichenliste

- 1: Hohlfaser
- 2: Trägermatrix
- 3: Flüssigkeitsfilterelement
- 4: Flüssigkeitseinlaß
- 5: Flüssigkeitsauslaß
- 6: Haltevorrichtung
- 7: Trennschicht
- 8: Mantelfläche
- 9: Ende der Hohlfaser
- 10: Wechselfilter
- 11: undurchlässige Einbindung der Hohlfaser
- 12: Gewinde
- 13: Dichtung
- 14: Inneres der Hohlfaser
- 15: zentrale Rückführung
- 16: Sammelraum
- 17: Rückspülleitung
- 18: Rückspülventil
- 19: Vorfilter
- 20: Flüssigkeitsleitung

## Patentansprüche

1. Flüssigkeitsfilterelement mit wenigstens einer Hohlfaser (1), wobei wenigstens das eine Ende der wenigstens einen Hohlfaser (1) in einer Trägermatrix (2) eingebunden ist sowie wenigstens das andere Ende der wenigstens einen Hohlfaser (1) in einer Trägermatrix (2) eingebunden ist, wobei das Flüssigkeitsfilterelement (3) wenigstens einen Flüssigkeitseinlaß (4) und einen Flüssigkeitsauslaß (5) aufweist, wobei das Flüssigkeitsfilterelement (3) über wenigstens eine Haltevorrichtung (6) verfügt.

2. Flüssigkeitsfilterelement nach Anspruch 1, dadurch gekennzeichnet, daß die Hohlfaser (1) aus Polysulfon besteht.

3. Flüssigkeitsfilterelement nach Anspruch 1 oder 2, dadurch gekennzeichnet, daß die Hohlfaser (1) über eine oder zwei Trennschichten (7) verfügt.

4. Flüssigkeitsfilterelement nach einem oder mehreren der vorgenannten Ansprüche, dadurch gekennzeichnet, daß beide Enden der Hohlfaser (1) in der selben Trägermatrix (2) eingebunden sind.

5. Flüssigkeitsfilter nach Anspruch 4, dadurch gekennzeichnet, daß beide Enden der Hohlfaser (1) parallel zueinander eingebunden sind.

6. Flüssigkeitsfilterelement nach einem oder mehreren der vorgenannten Ansprüche, dadurch gekennzeichnet, daß der Flüssigkeitseinlaß (4) über die Mantelfläche (8) der Hohlfaser (1) erfolgt.

7. Flüssigkeitsfilterelement nach einem oder mehreren der vorgenannten Ansprüche, dadurch gekennzeichnet, daß der Flüssigkeitsauslaß (5) über die Enden der Hohlfaser (1) erfolgt.

8. Flüssigkeitsfilterelement nach einem oder mehreren der vorgenannten Ansprüche, dadurch gekennzeichnet, daß die Trägermatrix (2) Bestandteil der Haltevorrichtung (6) ist.

9. Flüssigkeitsfilterelement nach einem oder mehreren der vorgenannten Ansprüche, dadurch gekennzeichnet, daß die Hohlfaser (1) in einem Längenbereich von 100 - 400 mm liegt.

10. Wechselfilter, dadurch gekennzeichnet, daß ein Flüssigkeitsfilterelement (3) nach einem oder mehreren der vorgenannten Ansprüche zum Einsatz kommt.
